# EUROPÄISCHE PATENTSCHRIFT

(11) **EP 4 334 813 B1**
(45) Veröffentlichungstag und Bekanntmachung des Hinweises auf die Patenterteilung: **05.03.2025**
(21) Anmeldenummer: 22754334.5
(22) Anmeldetag: 18.07.2022
(51) Int. Cl.: G06F 9/455, G06F 21/62, G06F 21/53, G06F 3/06

(54) **ABSICHERUNG EINES EINRICHTEVORGANGS EINES UNTERVERZEICHNISSES UND EINER NETZWERKSCHNITTSTELLE FÜR EINE CONTAINERINSTANZ**
PROTECTION OF A SETUP PROCESS OF A SUBDIRECTORY AND A NETWORK INTERFACE FOR A CONTAINER INSTANCE
SÉCURISATION D'UN PROCESSUS DE RÉDUCTION D'UN SOUS-RÉPERTOIRE ET D'UNE INTERFACE RÉSEAU POUR UNE INSTANCE DE CONTENEUR

(30) Priorität: 20.07.2021 EP 21186611
(43) Veröffentlichungstag der Anmeldung: 13.03.2024
(73) Patentinhaber: Siemens Aktiengesellschaft, 80333 München (DE)
(72) Erfinder: KNIERIM, Christian, 81373 München (DE)
(74) Vertreter: Siemens Patent Attorneys
(86) Internationale Anmeldenummer: PCT/EP2022/070085
(87) Internationale Veröffentlichungsnummer: WO 2023/001773

(56) Entgegenhaltungen:
- US-A1- 2009 222 880
- US-A1- 2014 282 518
- US-A1- 2018 314 846

## Beschreibung

Die Erfindung betrifft ein Verfahren zur Absicherung eines Einrichtevorgangs eines Unterverzeichnisses und/oder einer Netzwerkschnittstelle für eine Containerinstanz, bei dem ein Unterverzeichnis der Containerinstanz durch Zuweisung eines Unterverzeichnisses in einem Quellverzeichnis eines zugeordneten physikalischen Datenspeichers bereitgestellt wird und eine Netzwerkschnittstelle der Containerinstanz durch Zuweisung einer entsprechenden virtuellen oder physikalischen Netzwerkschnittstelle eines zugeordneten Gastrechners bereitgestellt wird.

Containervirtualisierung ist eine Methode, bei der mehrere Instanzen eines Betriebssystems isoliert voneinander einen Betriebssystemkern eines Gastrechners nutzen können. Software Container, im Weiteren kurz Container genannt, stellen somit eine leichtgewichtige Art der Virtualisierung einer Laufzeitumgebung auf einem Gastrechner, auch Hostsystem genannt, dar und kapseln eine in einer Containerinstanz betriebene Software-Applikation vom darunterliegenden Hostsystem ab. Software Applikationen, im Weiteren kurz Applikation genannt, werden mittlerweile in vielen Bereichen wie beispielsweise der Industrieautomation und der Prozesssteuerung, aber auch für Anwendungen in Transportsystemen oder Fahrzeugen mittels Container implementiert.

Um eine Containerinstanz auf dem Hostsystem starten zu können, wird ein Containerabbild benötigt, welches neben der Applikationssoftware selbst auch die für die Applikationssoftware erforderlichen Binärprogramme und Bibliotheken enthält. Oftmals wird zur Bereitstellung der erforderlichen Binärprogramme und Bibliotheken ein so genanntes Basis-Image verwendet, welches einen Paketmanager enthält mit dessen Hilfe weitere Komponenten innerhalb des Containerabbild installiert werden können.

Um der Containerinstanz beim Start Parameter zuordnen zu können oder von der Containerinstanz erzeugte Daten persistent speichern zu können, werden zum Start einer solchen Containerinstanz sogenannte "Volumes" an diese übergeben und in die Containerinstanz eingehängt. Ein "Volume" ist ein Unterverzeichnis eines Dateisystems in der Containerinstanz, das vom darunterliegenden Betriebssystem in die Containerinstanz eingehängt wird und in dem Daten persistent, also dauerhaft, gespeichert sind bzw. werden.

Mit Hilfe eines solchen persistenten Unterverzeichnisses werden einer Containerinstanz beispielsweise Schlüssel eines kryptographischen Netzwerkprotokolls für den sicheren Betrieb von Netzwerkdiensten, private Schlüssel für Zertifikate, Konfigurationseinstellungen für die Containerinstanz oder Umgebungsinformationen des darunterliegenden Gerätes oder der gesamten Laufzeitumgebung an die Containerinstanz übergeben und hiermit auch die in der Containerinstanz betriebene Applikation parametriert.

Welche Quellverzeichnisse des darunterliegenden Systems als persistente Unterverzeichnisse in die Containerinstanz eingehängt werden, ist beim Erstellen eines Containerabbilds nicht bekannt. Zur Übergabe von Startparametern kann jedoch für einen den Ersteller des Containerabbilds ein Zielverzeichnis definiert werden, in welches das persistente Unterverzeichnis mit den Übergabeparametern eingehängt werden soll.

US 2014/282518 A1 offenbart ein Verfahren und eine Rechnerumgebung zum Durchsetzen einer Richtlinie beim Starten von Virtuellen-Maschinen-Images in einem Cloud-Netzwerk. Dabei wird eine Anforderung zum Starten eines Virtuellen-Maschinen-Images in einer zwischengeschalteten Richtlinien-Management-Engine aufgefangen. In der Richtlinien-Management-Engine wird überprüft, ob die Anforderung einer Richtlinie genügt. Die Richtlinien-Management-Engine ist mit dem Cloud-Netzwerk verbunden und zwischen einem Clientsystem und dem Cloud-Netzwerk oder zwischen einer Netzwerk-Firewall und einer Cloud-Management Plattform oder vor der Netzwerk-Firewall angeordnet.

US 2018/314846 A1 beschreibt Sicherheitsrichtlinien, die mit einer Gast-Laufzeitumgebung einer Virtuellen Maschine, eines Containers oder ähnlichem, assoziiert sind und Einschränkungen oder Berechtigungen für Aktivitäten, die in Rahmen der Ausführung der Gast-Laufzeitumgebung stattfinden, vorgibt.

US 2009/222880 A1 beschreibt ein Verfahren zur Zugriffskontrolle, bei dem der Zugang zu Systemressourcen, wie Netzwerckarten oder geteilten Ordnern oder externen Geräten gewährt oder entfernt wird.

Ein Problem entsteht nun, wenn andere, nicht autorisierte Containerinstanzen unberechtigterweise auf Unterverzeichnis, insbesondere ein persistentes Unterverzeichnis zugreifen, da hierdurch beispielsweise Schlüsselmaterial, welches für Containerinstanzen gebildet aus anderen Containerabbildern vorgesehen ist, abgegriffen wird. Ein ähnliches Problem entsteht bei der Einbindung von Netzwerkschnittstellen, die einer Containerinstanz zugewiesen werden sollen. Durch unberechtigte Mitbenutzung von Netzwerkschnittstellen kann Verkehr zwischen anderen Containerinstanzen abgehört werden. Diese Zuweisung einer Netzwerkschnittstelle erfolgt im Falle einer laufenden Containerinstanz direkt über Kommandos der Container-Laufzeitumgebung, beispielsweise durch die Definition spezieller Parameter in Docker-Kommandos oder mit Hilfe von Docker-Compose-Dateien. Der Ersteller eines Containerabbilds weiß hierbei nicht, welche anderen Containerabbilder sich in das gleiche Netzwerk bzw. auf die gleiche Netzwerkschnittstellen verbinden. Böswillige Containerinstanzen können sich somit auf eine einer anderem Containerinstanz zugewiesenen Netzwerkschnittstelle verbinden und darüber Daten ausspähen.

Es ist somit eine Aufgabe der vorliegenden Erfindung, einen unberechtigten Zugriff und ein unberechtigtes Modifizieren oder Ausspähen auf eine Containerinstanz, insbesondere auf der Containerinstanz zugewiesene Dateisysteme und zugewiesene Netzwerkschnittstellen zu erschweren.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur Absicherung eines Einrichtevorgangs bei dem mindestens ein Unterverzeichnis der Containerinstanz durch Zuweisung mindestens eines Unterverzeichnisses in einem Quellverzeichnis eines zugeordneten physikalischen Datenspeichers bereitgestellt wird und mindestens eine Netzwerkschnittstelle der Containerinstanz durch Zuweisung mindestens einer entsprechenden virtuellen oder physikalischen Netzwerkschnittstelle eines zugeordneten Gastrechners bereitgestellt wird, umfassend die Schritte
- Erzeugen einer Verzeichnisrichtline, die mindestens eine Einbinderegel für die Zuweisung des Unterverzeichnisses der Containerinstanz zum Unterverzeichnis im Quellverzeichnis umfasst, insbesondere für persistente Unterverzeichnisse in dem Daten persistent gespeicherten werden;
- Erzeugen einer Schnittstellenrichtline, die mindestens eine Einbinderegel für die Zuweisung der Netzwerkschnittstelle der Containerinstanz zu einer virtuellen und/oder physikalischen Netzwerkschnittstelle des zugeordneten Gastrechners umfasst,
- Laden eines Containerabbilds, einer zugeordneten Konfigurationsdatei, sowie der Verzeichnisrichtlinie und der Schnittstellenrichtlinie in eine Laufzeitumgebung des Gastrechners,
- vor dem Startvorgang der Containerinstanz, überprüfen, ob alle vom Containerabbild für die Containerinstanz festgelegten Unterverzeichnisse im Quellverzeichnis entsprechend der Verzeichnisrichtlinie einbindbar sind und ob alle von der Konfigurationsdatei festgelegten Netzwerkschnittstellen entsprechend der Schnittstellenrichtlinie einbindbar sind, ohne bereits vorhandene Einbindeoptionen von Unterverzeichnissen und Netzwerkschnittstellen von weiteren Containerinstanzen zu verletzen, und
- Erzeugen der Containerinstanz aus dem Containerabbild im Gastrechner lediglich bei einem positiven Überprüfungsergebnis.

Zur besseren Verständlichkeit wurde in den einzelnen Merkmalen der Ausdruck "das mindestens eine" bzw. "die mindestens eine Netzwerkschnittstelle" durch "das Unterverzeichnis" bzw. "die Netzwerkschnittstelle" ersetzt. Die Anspruchsmerkmale gelten somit nicht nur für ein einziges Unterverzeichnis bzw. eine Netzwerkrichtlinie, sondern auch jeweils für mehrere Unterverzeichnisse und Netzwerkschnittstellen. Dies gilt für alle Ansprüche und die Beschreibung.

Durch das Überprüfen der Konfigurationsanweisungen in der Konfigurationsdatei und den im Containerabbild festgelegten Anforderungen an Verzeichnisse und Netzwerkschnittstellen gegenüber der Verzeichnis- und Schnittstellenrichtlinie vor dem Start der Containerinstanz können sicherheitskritische Unterverzeichnisse und Netzwerkschnittstellen der Containerinstanz identifiziert werden. Insbesondere wird überprüft, ob und mit welchen Einbindeoptionen die gleichen Unterverzeichnisse oder Netzwerkschnittstellen bereits in andere Containerinstanzen auf dem Gastrechner eingebunden sind. Sind durch die bereits vorliegende Einbindung in andere Containerinstanzen die Verzeichnis- und Netzwerkrichtlinie nicht mehr durchsetzbar, führt dies zu einem negativen Prüfungsergebnis. Lediglich wenn keine in den Verzeichnis- und Schnittstellenrichtlinie vorgeschriebene Einbindeoption verletzt wird, liegt ein positives Prüfungsergebnis vor und die Containerinstanz wird erzeugt. Somit liegen lediglich überprüfte und sichere Containerinstanzen auf dem Gastrechner vor. Die Verzeichnisrichtlinie umfasst insbesondere Einbinderegeln für persistente Unterverzeichnisse. Diese sind durch ihre Verwendung zum Einbringen von sicherheitsrelevanten Daten oder Konfigurationseinstellungen der Applikation, wie kryptographische Schlüssel oder zum Abspeichern von durch die Applikation erzeugte, persistierte Daten besonders schutzbedürftig.

Die mindestens eine Netzwerkschnittstelle können virtuelle Netzwerkschnittstellen sein, die ein virtuelles Netzwerk auf dem Gastrechner erzeugen oder physikalisch Netzwerkschnittstellen des Gastrechners sein, die Daten aus dem Gastrechner heraus übertragen.

In einer vorteilhaften Ausführungsform werden die Verzeichnisrichtlinie und die Schnittstellenrichtlinie durch einen Ersteller der Konfigurationsdatei erstellt und an die Konfigurationsdatei gebunden.

Dadurch kann ein Ersteller der Konfigurationsdatei sowohl die Einbinderegeln für die Unterverzeichnisse und Netzwerkschnittstellen in die Containerinstanz vorgeben.

In einer vorteilhaften Ausführungsform wird die Verzeichnisrichtline durch einen Ersteller des Containerabbilds erstellt und an das Containerabbild gebunden.

Dadurch kann nicht nur der Betreiber der Laufzeitumgebung und somit der Betreiber des Gastrechners, sondern der Ersteller des Containerabbilds die Einbinderegeln für Unterverzeichnisse und Netzwerkschnittstellen festlegen.

In einer vorteilhaften Ausführungsform umfasst die Verzeichnisrichtlinie Metainformation in Bezug auf die Unterverzeichnisse und die Metainformation wird in Form eines Abbild-Kennzeichens, auch als "image tag" bezeichnet, dem Containerabbild zugewiesenen.

Dies ermöglicht eine einfache Kopplung der Verzeichnisrichtline an das Containerabbild.

In einer vorteilhaften Ausführungsform legt die Verzeichnisrichtlinie und/oder die Schnittstellenrichtlinie fest, ob das Unterverzeichnis im Quellverzeichnis und/oder die Netzwerkschnittstelle ausschließlich von einer einzigen Containerinstanz eingebunden werden darf oder von mehreren Container-instanzen gebildet aus dem gleichen Containerabbild oder von mehreren Containerinstanzen gebildet aus unterschiedlichen Containerabbildern eingebunden werden darf.

Somit kann der Zugriff auf ein Unterverzeichnis im Quellverzeichnis abhängig vom Containerabbild, aus dem die zugreifende Containerinstanz erstellt wurde, vorgegeben werden.

In einer vorteilhaften Ausführungsform legt die Verzeichnisrichtlinie mindestens eine erlaubte Zugriffsoption auf das Unterverzeichnis fest.

Durch die Verzeichnisrichtline ist somit hinterlegt, ob das Quellverzeichnis nur für die Containerinstanz selbst exklusiv als Zielverzeichnis in die Containerinstanz eingebunden werden soll, ob es für den gleichen Instanz-Typ, also Container-instanzen, die aus dem gleichen Containerabbild erzeugt werden, eingehängt werden darf und ob andere Instanztypen, also Containerinstanzen, die von einem anderen Containerabbild erzeugt wurden, und mit welchen Zugriffsoptionen eingebunden werden darf. Zugriffsoptionen sind beispielsweise ein nur lesender, nur schreibender oder lesender und schreibender Zugriff oder auch eine Einschränkung bezüglich der Ausführbarkeit von in das Unterverzeichnis eingehängten Dateien, und weitere. Die Bezeichnungen "einbinden", "einhängen" und "einrichten" werden in der Beschreibung als Synonyme verwendet.

In einer vorteilhaften Ausführungsform legt die Verzeichnisrichtlinie und/oder Schnittstellenrichtlinie Einbinderegeln abhängig von einer Signatur des Containerabbildes fest.

Somit können Einbinderegeln abhängig vom Ersteller des Containerabbilds eingebracht und durchgesetzt werden.

In einer vorteilhaften Ausführungsform umfasst die Verzeichnisrichtlinie und/oder Schnittstellenrichtlinie einen Verweis auf die Konfigurationsdatei mit Direktiven, welche auf mindestens eine Umgebungsvariable verweisen, und die Umgebungsvariable eine Angabe eines Unterverzeichnisses in der Containerinstanz umfasst.

Mit einer Umgebungsvariable kann das Zielverzeichnis dynamisch angegeben werden. Dabei wird in der Verzeichnisrichtlinie das Unterverzeichnis der Containerinstanz nicht explizit genannt, sondern durch eine Variable angegeben, deren Wert das einzubindende Unterverzeichnis angibt.

In einer vorteilhaften Ausführungsform umfasst die Schnittstellenrichtline einen Verweis auf die Konfigurationsdatei mit erlaubten Eigenschaften der Netzwerkschnittstellen.

In einer vorteilhaften Ausführungsform wird eine zentrale Einbinde-Datenbank für die Laufzeitumgebung der Containerinstanz erzeugt, und die Einbinde-Datenbank umfasst einen Namen und eine Version des Containerabbilds aus dem die Containerinstanz erzeugt wurde, das Zielverzeichnis in der Containerinstanz, das Quellverzeichnis des zugeordneten physikalischen Datenspeichers und die erlaubten Einbindeoptionen und Zugriffsoptionen des Zielverzeichnisses, sowie Angaben und Einbindeoptionen der Netzwerkschnittstellen der Containerinstanz.

In einer vorteilhaften Ausführungsform wird die Einbinde-Datenbank persistent gespeichert.

In einer vorteilhaften Ausführungsform wird anhand der Einbinde-Datenbank überprüft, ob ein für ein Unterverzeichnis angefordertes Quellverzeichnis oder ein übergeordnetes oder untergeordnetes Verzeichnis des Quellverzeichnis, und/oder ob eine angeforderte Netzwerkschnittstelle bereits für ein anderes Containerabbild aktuell eingebunden ist oder für ein Containerabbild eines anderen Typs jemals eingebunden war.

Durch die Einbinde-Datenbank können parallel vorhandene, aber auch zu einer früheren Zeit erzeugte Containerinstanzen und deren eingebundene Unterverzeichnisse und Netzwerkschnittstellen für die Überprüfung mit der Verzeichnis- und/oder Schnittstellenrichtlinie bereitgestellt werden.

In einer vorteilhaften Ausführungsform werden nach einem erfolgreichen Einbinden eines Unterverzeichnisses und/oder einer Netzwerkschnittstelle, der Name und die Version des Containerabbilds, das Zielverzeichnis in der Containerinstanz, das Quellverzeichnis des zugeordneten physikalischen Datenspeichers, die erlaubten Einbindeoptionen und Zugriffsoptionen des Zielverzeichnisses und/oder die eingebundene Netzwerkschnittstelle und die Einbindeoptionen für die Netzwerkschnittstelle an die Einbinde-Datenbank übermittelt und dort gespeichert.

Somit wird die Einbinde-Datenbank automatisch nach jedem erfolgreichen Einrichtevorgang mit den aktuell eingerichteten Unterverzeichnissen und Netzwerkschnittstellen aktualisiert. Gemäß Erfindung wird ein Unterverzeichnis nicht in die Containerinstanz eingebunden, wenn beim Überprüfen von Containerinstanzen, die aus anderen Containerabbildern und/oder mit anderen Konfigurationsdateien gebildet wurden, gegenüber der Verzeichnisrichtlinie festgestellt wird, dass die Verzeichnisrichtlinie keine erlaubte Einbindeoption für das einzubindende Unterverzeichnis enthält oder das einzubindende Unterverzeichnis ein übergeordnetes oder untergeordnetes Verzeichnis zu einem nicht in der Verzeichnisrichtlinie genannten Unterverzeichnis ist, und/oder
wobei eine Netzwerkschnittstelle nicht eingebunden wird, wenn beim Überprüfen von Containerinstanzen, die aus anderen Containerbildern und/oder mit anderen Konfigurationsdateien gebildet wurden, gegenüber der Schnittstellenrichtlinie festgestellt wird, dass die Schnittstellenrichtlinie keine erlaubte Einbindeoption für die einzubindende Netzwerkschnittstelle enthält.

Somit wird verhindert, dass Unterverzeichnisse oder Netzwerkschnittstellen, die nicht der Verzeichnis- oder Netzwerkrichtlinie entsprechen in die Containerinstanz eingebunden werden.

Ein zweiter Aspekt der Erfindung betrifft eine Vorrichtung zur Absicherung eines Einrichtevorgangs bei dem mindestens ein Unterverzeichnis der Containerinstanz durch Zuweisung mindestens eines Unterverzeichnisses in einem Quellverzeichnis eines zugeordneten physikalischen Datenspeichers bereitgestellt wird und mindestens eine Netzwerkschnittstelle der Containerinstanz durch Zuweisung mindestens einer entsprechenden virtuellen oder physikalischen Netzwerkschnittstelle eines zugeordneten Gastrechners bereitgestellt wird, umfassend
eine Generierungseinheit, die derart ausgebildet ist
- eine Verzeichnisrichtline zu erzeugen, die mindestens eine Einbinderegel für die Zuweisung des Unterverzeichnisses der Containerinstanz zum Unterverzeichnis im Quellverzeichnis umfasst, insbesondere für persistente Unterverzeichnisse in dem Daten persistent gespeicherten werden;
- eine Schnittstellenrichtline zu erzeugen, die mindestens eine Einbinderegel für die Zuweisung der Netzwerkschnittstelle der Containerinstanz zur virtuellen und/oder physikalischen Netzwerkschnittstelle des zugeordneten Gastrechners umfasst,
- ein Containerabbild, eine zugeordnete Konfigurationsdatei, sowie die Verzeichnisrichtlinie und die Schnittstellenrichtlinie in eine Laufzeitumgebung des Gastrechners zu laden, und der Gastrechner derart ausgebildet ist,
- vor dem Startvorgang der Containerinstanz zu überprüfen, ob alle vom Containerabbild für die Containerinstanz festgelegten Unterverzeichnisse im Quellverzeichnis entsprechend der Verzeichnisrichtlinie einbindbar sind, und/oder ob alle von der Konfigurationsdatei festgelegten Netzwerkschnittstellen entsprechend der Schnittstellenrichtlinie einbindbar sind, ohne Einbindeoptionen von Unterverzeichnissen und Netzwerkschnittstellen von bereits vorhandenen weiteren Container-instanzen zu verletzen, und
- die Containerinstanz aus dem Containerabbild im Gastrechner lediglich bei einem positiven Überprüfungsergebnis zu erzeugen.

Durch die Anordnung kann sichergestellt werden, das Netzwerkschnittstellen und Unterverzeichnisse nach fest vorgegebenen Einbinderegeln für eine Containerinstanz eingebunden werden und somit ein Zugriff durch andere Containerinstanzen verhinderbar ist.

Ein dritter Aspekt der Erfindung betrifft ein Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens durchzuführen. Sofern es in der nachfolgenden Beschreibung nicht anders angegeben ist, beziehen sich die Begriffe "überprüfen", "erzeugen", "laden" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliege können, beispielsweise als elektrische Impulse. Das System und darin insbesondere die physikalische als auch die virtuelle Realisierung ausgebildeten Gastrechner, Generierungsvorrichtung und weitere kann einen oder mehrere Prozessoren umfassen.

Ein Computerprogrammprodukt, wie z. B. ein Computerprogrammmittel, kann beispielsweise als Speichermedium, wie z. B. Speicherkarte, USB-Stick, CD-ROM, DVD oder auch in Form einer herunterladbaren Datei von einem Server in einem Netzwerk bereitgestellt oder geliefert werden. Dies kann z. B. in einem drahtlosen Kommunikationsnetzwerk durch die Übertragung einer entsprechenden Datei auf das Computerprogrammprodukt oder dem Computerprogrammmittel erfolgen.

Ausführungsbeispiele des erfindungsgemäßen Verfahrens und der erfindungsgemäßen Anordnung sind in den Zeichnungen beispielhaft dargestellt und werden anhand der nachfolgenden Beschreibung näher erläutert. Es zeigen:
- Fig. 1: ein Ausführungsbeispiel eines erfindungsgemäßen Gastrechners mit einer Containerinstanz in schematischer Darstellung;
- Fig. 2: ein Ausführungsbeispiel des erfindungsgemäßen Verfahrens in Form eines Ablaufdiagramms; und
- Fig. 3: ein Ausführungsbeispiel eines Containerabbilds mit Dateisystemschichten einer Anwendung des erfindungsgemäßen Verfahrens in schematischer Darstellung.
Einander entsprechende Teile sind in allen Figuren mit den gleichen Bezugszeichen versehen.

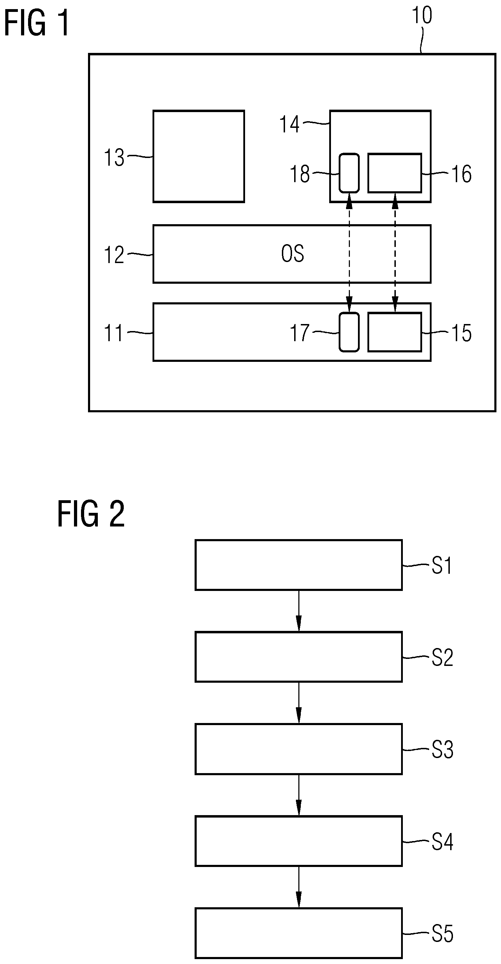

Fig. 1 zeigt einen Gastrechner 10 mit Hardware-Ressourcen 11, einen Betriebssystemkern 12, auch Kernel genannt. Hardware-Ressourcen 11 sind beispielsweise Prozessoren zur Durchführung von Operationen, ein Datenspeicher 15 oder auch Netzwerkschnittstellen 17, zur Übermittlung von Daten an ein internes oder externes Netzwerk. Bei einer Containervirtualisierung können in einer Laufzeitumgebung mehrere Instanzen des Betriebssystems isoliert voneinander den Betriebssystemkern 12 des Gastrechners 10 nutzen. Mit Hilfe der Container-Laufzeitumgebung lässt sich verwalten, welche Hardware-Ressourcen 11 den Prozessen in der Containerinstanz 13, 14 zugewiesen werden. Eine Containerinstanz 14 kann zum Betreiben einer Software-Applikation verwendet werden, indem ein Containerabbild mit einer Software-Applikation in eine solche Instanz des Betriebssystems 12 geladen wird. Anhand einer Bereitstellungskonfigurationsdatei, im Weiteren kurz Konfigurationsdatei genannt, wird unter anderem mindestens ein Unterverzeichnis eines Quellverzeichnisses 15 einem Unterverzeichnis in einem Zielverzeichnis 16 in der Containerinstanz 14 zugeordnet. In gleicher Weise werden durch die Konfigurationsdatei Netzwerkschnittstellen 17 aus den Hardware-Ressourcen 11 des Gastrechners 10 einer Netzwerkschnittstelle 18 der Containerinstanz 14 zugeordnet. Netzwerkschnittstellen können virtuelle interne Schnittstelle oder auch reale externe Schnittstellen sein.

Um der Containerinstanz 14 beim Start Parameter zuordnen zu können oder von der Containerinstanz erzeugte Daten speichern zu können, werden zum Start der Containerinstanz 14 Unterverzeichnisse eines Dateisystems, sogenannte "Volumes", an die Containerinstanz 14 übergeben und in die Containerinstanz eingehängt. Ein persistentes Unterverzeichnis ist ein Unterverzeichnis eines Dateisystems in der Containerinstanz 14, das vom darunterliegenden Betriebssystem 12 in die Containerinstanz 14 eingehängt wird und in dem Daten persistent, also dauerhaft, gespeichert sind bzw. werden. Das Dateisystem kann physisch auf den Gastrechner 10, beispielsweise als Teil der Hardware-Ressourcen 11 oder in einer vom Gastrechner 10 abgesetzten oder ausgelagerten Speichereinheit angeordnet sein. In einer Docker-Laufzeitumgebung wird ein "Volume" beispielsweise mit Hilfe eines sogenannten "Bind-Mounts" eingehängt.

Mit Hilfe eines solchen persistenten Unterverzeichnisses werden einer Containerinstanz beispielsweise Schlüssel eines kryptographischen Netzwerkprotokolls für den sicheren Betrieb von Netzwerkdiensten, private Schlüssel für Zertifikate, Konfigurationseinstellungen für die Containerinstanz oder Umgebungsinformationen des darunterliegenden Gastrechners 10 oder der gesamten Laufzeitumgebung an die Containerinstanz übergeben und hiermit auch die im Container betriebene Applikation parametriert.

Welche Quellverzeichnisse 15 des Gastrechners 10 als Unterverzeichnisse 16 in die Containerinstanz 14 eingehängt werden, ist beim Erstellen eines Containerabbilds nicht bekannt. Des Weiteren ist es möglich, dass das Persistierungsziel über einen Konfigurationsparameter definiert wird, welcher durch einen Übergabeparameter oder innerhalb der Konfigurationsdatei abgelegt ist, die innerhalb des eingehängten persistenten Zielverzeichnisses der Instanz zur Verfügung gestellt wird.

Die einzuhängenden persistenten Unterverzeichnisse werden beim Start der Containerinstanz 14 durch entsprechende Startup-Parameter über die Kommandozeile übergeben. Alternativ besteht die Möglichkeit über entsprechenden Konfigurationsdirektiven innerhalb der Konfigurationsdatei, beispielsweise einer Docker-Compose-Datei, oder als Bereitstellungsinformation in einem Orchestrierer entsprechende persistente Unterverzeichnisse an die Containerinstanz 14 zu übergeben.

Das erfindungsgemäße Verfahren zur Absicherung des Einrichtevorgangs eines Unterverzeichnisses und/oder einer Netzwerkschnittstelle für eine Containerinstanz zur Bereitstellung einer Container-basierten Anwendung, wird nun anhand von Fig. 2 näher beschrieben. Dabei wird ein Unterverzeichnis der Containerinstanz 14 durch Zuweisung eines Unterverzeichnisses in einem Quellverzeichnis 15 eines zugeordneten physikalischen Datenspeichers bereitgestellt und eine Netzwerkschnittstelle der Containerinstanz durch Zuweisung einer entsprechenden virtuellen oder physikalischen Netzwerkschnittstelle eines zugeordneten Gastrechners bereitgestellt wird

In einem ersten Verfahrensschritt S1 wird eine Verzeichnisrichtline erzeugt, die mindestens eine Einbinderegel für die Zuweisung eines Unterverzeichnisses der Containerinstanz zum Unterverzeichnis im Quellverzeichnis umfasst, insbesondere für persistente Unterverzeichnisse in dem Daten persistent gespeicherten werden. Entsprechend wird im Verfahrensschritt S2 eine Schnittstellenrichtline in der Containerinstanz erzeugt, die mindestens eine Einbinderegel für die Zuweisung der Netzwerkschnittstelle der Containerinstanz zur Netzwerkschnittstelle des zugeordneten Gastrechners umfasst. Insbesondere legt die Verzeichnisrichtlinie fest, welche Verzeichnisse oder Dateien in der Containerinstanz als persistente Unterverzeichnisse übergeben werden dürfen. Im Verfahrensschritt S3 wird ein Containerabbild, eine zugeordnete Konfigurationsdatei, sowie der Verzeichnisrichtlinie und/oder der Schnittstellenrichtlinie in eine Laufzeitumgebung des Gastrechners geladen.

Die Verzeichnisrichtlinie wird beispielsweise durch einen Ersteller des Containerabbilds erstellt und an das Containerabbild gebunden. Die Verzeichnisrichtlinie umfasst Metainformation in Bezug auf die Unterverzeichnisse und die Metainformation wird in Form eines Abbild-Kennzeichens, auch image-tag bezeichnet, dem Containerabbild zugewiesenen.

Analog wird im Verfahrensschritt S2 eine Schnittstellenrichtline erzeugt, die mindestens eine Einbinderegel für die Zuweisung der Netzwerkschnittstelle der Containerinstanz zur Netzwerkschnittstelle des zugeordneten Gastrechners umfasst.

In der Verzeichnisrichtlinie und in der Schnittstellenrichtlinie ist festgelegt, ob das Unterverzeichnis im Quellverzeichnis und die Netzwerkschnittstelle ausschließlich von einer einzigen Containerinstanz oder von mehreren Container-instanzen gebildet aus dem gleichen Containerabbild oder von mehreren Containerinstanzen gebildet aus unterschiedlichen Containerabbildern eingebunden werden darf. Die Verzeichnisrichtlinie legt des Weiteren eine erlaubte Zugriffsoption in Bezug auf einen nur lesenden, nur schreibenden oder lesenden und schreibenden Zugriff auf das Unterverzeichnis oder die Netzwerkschnittstelle fest. Durch die Verzeichnisrichtlinie und/oder die Schnittstellenrichtlinie werden Einbinderegeln abhängig von einer Signatur des Containerabbildes festlegt.

Mit anderen Worten, die Verzeichnisrichtlinie legt fest, ob ein Zielverzeichnis nur exklusiv von einer Containerinstanz oder von allen Containerinstanzen des gleichen Instanztyps, d.h. aus dem gleichen Containerabbild gebildet, oder auch von Containerinstanzen von anderen Instanztypen, d.h. aus anderen Containerabbilder gebildet, beispielsweise mit den Zugriffsoptionen nur lesend oder auch schreibend eingehängt werden darf. Des Weiteren können Einschränkungen in der Verzeichnis- und/oder Schnittstellenrichtline abhängig von der Signatur des Container-Images definiert werden. Dies wird insbesondere für persistente Unterverzeichnisse festgelegt.

Analog zur Ressourcenzuteilung für Unterverzeichnisse, kann für Netzwerkressourcen in der Schnittstellenrichtlinie definiert werden, ob das oder die zugewiesenen Netzwerkschnittstellen zu einer Containerinstanz exklusiv zugeteilt werden, generell freigegeben werden oder nur einem Containerabbild geteilt werden, das eine in der Schnittstellenrichtlinie vorgegebene Signatur aufweist. Über die Schnittstellenrichtlinie wird somit gesteuert, dass sich nur vertrauenswürdige Containerinstanzen miteinander unterhalten. Diese Schnittstellenrichtlinie kann entweder für einzelne Containerabbilder definiert werden und beispielsweise über Abbildkennzeichen, sogenannte Tags, zugewiesen werden oder Schnittstellen-Definitionen einer Konfigurationsdatei, beispielsweise über eine Docker-Compose-Datei, referenzieren. Erfolgt die Schnittstellen-Definition auf Docker-Compose-Ebene, kann jede einzelne referenzierte Schnittstelle eingeschränkt werden und ein Default-Verhalten für weitere Schnittstellen definiert werden.

In einer Ausführungsform werden die Verzeichnisrichtlinie und die Schnittstellenrichtlinie durch einen Ersteller der Konfigurationsdatei erstellt und an die Konfigurationsdatei gebunden. In einer Ausführungsform umfasst die Schnittstellenrichtline einen Verweis auf die Konfigurationsdatei mit erlaubten Eigenschaften der Netzwerkschnittstellen. Optional umfasst die Verzeichnisrichtlinie einen Verweis auf die Konfigurationsdatei mit Direktiven, welche auf mindestens eine Umgebungsvariable verweisen, umfasst, und die Umgebungsvariable eine Angabe eines Unterverzeichnisses in der Containerinstanz. In gleicher Weise kann die Schnittstellenrichtline einen Verweis auf die Konfigurationsdatei mit erlaubten Eigenschaften der Netzwerkschnittstellen umfassen. Damit wird sichergestellt, dass auch von einem Plattformbetreiber Zielverzeichnisse und Netzwerkschnittstellen mit Hilfe eigener Konfigurationsdateien dynamisch über Parameter definiert werden können.

Vor dem Startvorgang der Containerinstanz, wird in Verfahrensschritt S4 überprüft, ob alle vom Containerabbild für die Containerinstanz festgelegten Unterverzeichnisse im Quellverzeichnis entsprechend der Verzeichnisrichtlinie einbindbar sind, und/oder ob alle von der Konfigurationsdatei festgelegten Netzwerkschnittstellen entsprechend der Schnittstellenrichtlinie einbindbar sind ohne Einbindeoptionen von Unterverzeichnissen und Netzwerkschnittstellen, von bereits vorhandenen weiteren Containerinstanzen zu verletzen. Abschließend wird in Verfahrensschritt S5 die Containerinstanz aus dem Containerabbild im Gastrechner lediglich dann erzeugt, wenn das Überprüfen ein positives Überprüfungsergebnis ergibt.

Es wird angenommen, dass der darunterliegenden Plattform, d.h. dem Betriebssystem 12 und den Ressourcen 11 des Gastrechners 10 und der Container-Laufzeitumgebung oder sofern mehrere Laufzeitumgebungen betrieben werden sollten, sämtlichen Ausprägungen von Laufzeitumgebungen vertraut wird und die Laufzeitumgebung Signaturen auswertet.

Soll eine Containerinstanz basierend auf dem Containerabbild in der Laufzeitumgebung gestartet werden, wird die hinterlegte Verzeichnisrichtlinie und die Schnittstellenrichtline für das Containerabbild vor dem eigentlichen Startvorgang interpretiert. Der Gastrechner 10 bzw. die Container-Laufzeitumgebung kann die Validierung der Verzeichnis- und Schnittstellenrichtline durchführen. Der Gastrechner kann dazu eine einfügbare Funktionseinheit, die einen eigenständigen Dienst aufruft, umfassen.

Für die Überprüfung wird eine zentrale Einbinde-Datenbank für die Laufzeitumgebung der Containerinstanz erzeugt. Die Einbinde-Datenbank umfasst einen Namen und eine Version des Containerabbilds, aus dem die Containerinstanz erzeugt wurde, sowie das Zielverzeichnis in der Containerinstanz, das Quellverzeichnis des zugeordneten physikalischen Datenspeichers und die erlaubten Einbindeoptionen und Zugriffsoptionen des Zielverzeichnisses, sowie die der Containerinstanz zugeordneten Netzwerkschnittstellen und Einbindeoptionen. Die Einbinde-Datenbank persistent gespeichert wird. Anhand der Einbinde-Datenbank wird überprüft, ob ein für ein Unterverzeichnis angefordertes Quellverzeichnis oder für ein übergeordnetes oder untergeordnetes Verzeichnis des Quellverzeichnis eingebunden ist. Des Weiteren wird überprüft, ob eine einzubindende Netzwerkschnittstelle bereits für ein anderes Containerabbild aktuell eingebunden ist oder für ein Containerabbild eines anderen Typs jemals eingebunden war.

Nach einem erfolgreichen Einbinden eines Unterverzeichnisses und/oder einer Netzwerkschnittstelle, werden der Name und die Version des Containerabbilds, das Zielverzeichnis in der Containerinstanz, das Quellverzeichnis des zugeordneten physikalischen Datenspeichers und die erlaubten Einbindeoptionen und Zugriffsoptionen des Zielverzeichnisses und/oder die eingebundene Netzwerkschnittstelle und die Einbindeoptionen für die Netzwerkschnittstelle an die Einbinde-Datenbank übermittelt und dort gespeichert.

Ein Unterverzeichnis wird nicht in die Containerinstanz eingebunden, wenn beim Überprüfen von Containerinstanzen, die aus anderer Containerbildern und/oder Konfigurationsdateien gebildet wurden, gegenüber der Verzeichnisrichtlinie festgestellt wird, dass die Verzeichnisrichtlinie keine erlaubte Einbindeoption für das einzubindende Unterverzeichnis enthält oder das einzubindende Unterverzeichnis ein übergeordnetes oder untergeordnetes Verzeichnis zu einem nicht in der Verzeichnisrichtlinie genannten Unterverzeichnis ist. Analog wir eine Netzwerkschnittstelle nicht eingebunden, wenn beim Überprüfen von Containerinstanzen, die aus anderer Containerbildern und/oder Konfigurationsdateien gebildet wurden, gegenüber der Schnittstellenrichtlinie festgestellt wird, dass die Schnittstellenrichtlinie keine erlaubte Einbindeoption für die einzubindende Netzwerkschnittstelle enthält.

Im Folgenden wird das Prüfen beim Einhängevorgang eines Unterverzeichnisses, insbesondere eines persistenten Unterverzeichnisses beschrieben:
Ist für das Containerabbild eine Verzeichnisrichtlinie hinterlegt, wird überprüft, ob das Quellverzeichnis bereits von einer anderen Containerinstanz in Verwendung ist oder in Verwendung eines anderen Instanztyps war und somit auf der Plattform für ein anderes Image reserviert ist. Um dies nicht nur für laufende Instanzen sondern auch für nicht-laufende Instanzen überprüfen zu können, wird eine zentrale Einbinde-datenbank für die Laufzeitumgebung erzeugt, in der neben dem Name, der Version (-Tag) des Containerabbilds dem Zielverzeichnis auch das gewünschte Quellverzeichnis und die gewünschte Zugriffsoption persistent gespeichert wird. Vor dem Start der auf einem Containerabbild basierenden Containerinstanz, wird zunächst überprüft, ob für diese Containerinstanz überhaupt persistente Unterverzeichnisse als Startup-Parameter definiert sind. Ist dies nicht der Fall, findet keine weitere Überprüfung statt, auch wenn im Containerabbild eine entsprechende Verzeichnisrichtline hinterlegt ist. Grund hierfür ist, dass durch das Starten der Containerinstanz keine Daten persistiert werden und auch keine schützenswerten Daten des darunterliegenden Gastrechners gefährdet sind. In einer alternativen Variante kann durch die Laufzeitumgebung erzwungen werden, dass bei einer vorliegenden Verzeichnisrichtline auch entsprechende Daten zugewiesen werden. Dies kann z.B. ebenfalls in der Verzeichnisrichtline für das Containerabbild definiert werden.

Ist mindestens ein einzubindendes Unterverzeichnis, insbesondere ein persistentes Unterverzeichnis beim Start einer Containerinstanz spezifiziert, werden folgendes überprüft:
Zunächst wird geprüft, ob das gewünschte Zielverzeichnis identisch mit einem im für das Containerabbild hinterlegten Verzeichnis ist, für das eine Verzeichnisrichtlinie hinterlegt ist. Ist dies nicht der Fall oder sollen übergeordnete oder untergeordnete Teilverzeichnisse in das Containerabbild eingehängt werden, wird der Vorgang abgebrochen. Hiermit wird sichergestellt, dass nur in den erlaubten Einhängepunkten persistente Daten erzeugt werden. Wird zum Referenzieren eine Variable oder eine Direktive einer Konfigurationsdatei verwendet, die ein Unterverzeichnis referenziert, das noch nicht eingehängt ist, überprüft die Laufzeitumgebung oder das Plugin die referenzierte Datei auf dem Quellverzeichnis und interpretiert diese.

Ist in der Verzeichnisrichtlinie spezifiziert, dass ein persistentes Unterverzeichnis von einer Containerinstanz eines Typs nur exklusiv eingebunden werden darf, wird überprüft, ob bereits eine Containerinstanz gleichen Typs existiert und das eingehängte Verzeichnis für das gleiche Quellverzeichnis aktiv ist. Ist dies der Fall, wird der Startvorgang ebenfalls abgebrochen und das Einrichten des Unterverzeichnisses verweigert. Hierdurch wird sichergestellt, dass z.B. zwei gleichlaufende Datenbanken, die in unterschiedlichen Container-Instanzen implementiert sind, keine inkonsistenten Daten erzeugen, indem diese auf das gleiche persistente Unterverzeichnis zugreifen. Sofern es sich um eine nichtorchestrierte Umgebung handelt, kann die Überprüfung stattfinden, indem auf den lokal betriebenen Container-Laufzeitumgebungen bereits eine Containerinstanz mit dem spezifizierten Unterverzeichnis betrieben wird. Im orchestrierten Umfeld kann hierzu ein Orchestrierer befragt werden oder in der Einbindedatenbank zusätzlich die laufenden Containerinstanzen mit den entsprechenden Unterverzeichnissen hinterlegt werden. Diese wird dann von der Container-Laufzeitumgebung kontinuierlich aktualisiert. Ein zugeordnetes Unterverzeichnis von einem anderen Quellverzeichnis ist - sofern dieses noch nicht in Benutzung ist - zulässig.

In der oben genannten Einbindedatenbank wird überprüft, ob das gewünschte Quellverzeichnis bzw. ein übergeordneter oder untergeordneter Pfad bereits für ein anderes Containerabbild aktuell eingehängt ist. Zusätzlich wird überprüft, ob das Verzeichnis oder ein untergeordnetes oder übergeordnetes Verzeichnis für ein Containerabbild eines anderen Typs jemals eingehängt wurde, und ob dies für den spezifizierten Pfad für das spezifizierte Containerabbild mit den spezifizierten Einbindeoptionen und Zugriffsoptionen zulässig ist. Wird hierbei eine Verletzung der hinterlegten Verzeichnisrichtlinie festgestellt, wird der Einrichtevorgang ebenfalls mit einer entsprechenden Fehlermeldung abgebrochen. Diese Überprüfung findet auch für ein Containerabbild statt, für das keine spezifischen Verzeichnisrichtlinie hinterlegt ist. Hiermit wird verhindert, dass von anderen Containerabbilds reservierte Bereiche von nicht autorisierten Containerabbildern benutzt werden.

Sofern das Einrichteverfahren erfolgreich ist und noch nicht in der Einbindedatenbank hinterlegt ist, wird dieser mit den Metadaten des zu startenden Containerabbilds und dem spezifiziertem Quellverzeichnis sowie der Version des Containerabbilds und dem Containerabbildnamen in die Einbindedatenbank eingetragen. Hiermit wird sichergestellt, dass bereits benutzte Verzeichnisse anderer Containerinstanzen entsprechend reserviert sind und für andere Containerinstanzen eine Überprüfung stattfinden kann.

Sollen Instanzen eines Containerabbilds generell nicht mehr auf einem Gastrechner betrieben werden, können in der Einbindedatenbank die jeweiligen Einträge für ein Containerabbild durch einen Administrator gelöscht werden. Ein Containerabbild wird somit für die Plattform bzgl. seiner eingebundenen Unterverzeichnisse komplett "deregistriert". Zudem kann in der für das Containerabbild hinterlegten Verzeichnis- und/oder Schnittstellenrichtline spezifiziert werden, dass die in der Einbindedatenbank hinterlegten Daten für ältere Containerabbilder überschrieben bzw. gelöscht werden, sodass in neueren Versionen ein geändertes Einbindeverhalten ermöglicht wird. Für die Verzeichnisrichtline soll zudem für jedes einzubindende Unterverzeichnis eines Containerabbilds hinterlegt werden, ob dieses versionsspezifisch oder für den alle Versionen dieses Containerabbilds generell gelten soll.

In einer erweiterten Ausführungsform wendet die Container-Laufzeitumgebung die spezifizierte Verzeichnis- und/oder Schnittstellenrichtlinie nur auf definierte Containerabbilder an, beispielsweise abhängig von der Signatur des Containerabbilds. Für ein Containerabbild, das nicht diesen Eigenschaften entspricht, kann somit die Interpretation der Verzeichnisrichtlinie generell deaktiviert werden. Es werden lediglich Quellverzeichnisse von geschützten Containerabbildern überprüft und gesichert, indem das Starten der Containerinstanzen für nicht-validierte Containerabbilder nur unterbunden wird, sofern versucht wird reservierte Quellverzeichnisse bzw. deren übergeordnete oder untergeordnete Verzeichnisse einzuhängen.

Die Zuweisung von Netzwerk-Interfaces wird analog geschützt. Wird eine Netzwerkschnittstelle neu angelegt, ist keine Prüfung erforderlich. Existiert diese Netzwerkschnittstelle bereits, wird von der Laufzeitumgebung überprüft, ob die mit der Netzwerkschnittstelle verbundenen Container-Instanzen gemäß der Schnittstellenrichtlinie spezifiziert sind und ob die Containerinstanz, welche das Containerabbild zugewiesen bekommen soll, den Anforderungen der anderen Containerinstanzen genügt. Wird hierbei eine Verletzung der Schnittstellenrichtline erkannt, wird der Startvorgang der Containerinstanz verweigert.

Die Prüfung wird nicht nur beim Start einer Containerinstanz, sondern auch bei einem dynamischen Hinzufügen von Netzwerkschnittstellen zur Laufzeit der Containerinstanz durchgeführt.

In einer Ausführungsform wird die Verzeichnis- und/oder Netzwerkrichtlinie mit Hilfe einer Signatur über den Inhalt der Verzeichnis- und/oder Netzwerkrichtlinie geschützt. Die Signatur wird von der Container-Laufzeitumgebung beim Ladevorgang validiert. Somit kann die Integrität der Verzeichnis- und/oder Netzwerkrichtlinie überwacht werden.

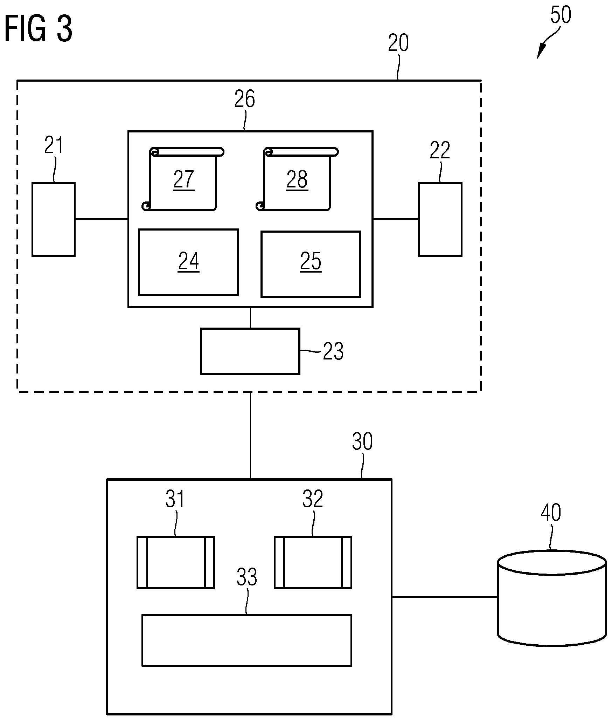

Fig. 3 zeigt eine Ausführungsform der erfindungsgemäßen Anordnung. Die Anordnung 50 umfasst eine Generierungsvorrichtung 20, einen Gastrechner 30 und eine Einbindedatenbank 40. Die Einbindedatenbank 40 kann im Gastrechner 30 integriert, oder, wie dargestellt, abgesetzt von Gastrechner 30 zentral und von mehreren Gastrechnern zugänglich ausgebildet sein. Die Generierungsvorrichtung 20 ist derart ausgebildet, eine Verzeichnisrichtline 28 zu erzeugen, die mindestens eine Einbinderegel für die Zuweisung des Unterverzeichnisses der Containerinstanz zum Unterverzeichnis im Quellverzeichnis umfasst, insbesondere für persistente Unterverzeichnisse in dem Daten persistent gespeicherten werden. Die Generierungsvorrichtung 21 ist des Weiteren derart ausgebildet eine Schnittstellenrichtline 27 zu erzeugen, die mindestens eine Einbinderegel für die Zuweisung der Netzwerkschnittstelle der Containerinstanz zur virtuellen und/oder physikalischen Netzwerkschnittstelle des zugeordneten Gastrechners 30 umfasst.

Die Generierungseinheit 21 ist derart ausgestaltet, dass sowohl die Verzeichnisrichtline 28 als auch die Schnittstellenrichtlinie 27 durch einen Ersteller einer Konfigurationsdatei 24 erstellbar ist. In einer Ausführungsvariante umfasst die Generierungseinheit 21 mindestens eine erste Eingabeeinheit 21, über die die Verzeichnisrichtlinie 28 und die Schnittstellenrichtlinie 27 vom Ersteller der Konfigurationsdatei 24 erstellbar ist. Die Generierungseinheit 20 verknüpft die Verzeichnisrichtlinie 28 und die Schnittstellenrichtlinie 27 mit der Konfigurationsdatei 24. Die Konfigurationsdatei 24 ist einem Containerabbild 25 zugeordnet.

In einer Ausführungsvariante ist die Generierungseinheit 21 derart ausgebildet, dass lediglich die Schnittstellenrichtlinie 27 vom Ersteller der Konfigurationsdatei 25 erstellbar ist und die Verzeichnisrichtlinie 27 von einem Ersteller des Containerabbilds 25 erstellbar ist. Die Generierungseinheit 21 umfasst beispielsweise eine zweite Eingabeeinheit, über die der Ersteller des Containerabbilds 24 die Verzeichnisrichtlinie erstellt. In diesem Fall wird die Verzeichnisrichtlinie 28 mit dem Containerabbild 25 verknüpft, die Schnittstellenrichtline 27 wird mit der Konfigurationsdatei 24 verknüpft. Die Konfigurationsdatei 24 referenziert das Containerabbild 25 und definiert die Zuordnung von einem Quellverzeichnis zu einem Zielverzeichnis sowie den Schnittstellen.

Die Generierungseinheit umfasst eine Ausgabeeinheit 23, über die das Containerabbild 25, die zugeordnete Konfigurationsdatei 24, sowie die Verzeichnisrichtlinie 28 und die Schnittstellenrichtlinie 27 in eine Laufzeitumgebung 33 des Gastrechners 30 geladen werden. Eine Containerinstanz 31 wird aus dem Containerabbild 25 anhand von Anweisungen und Zuweisungen, die in der Konfigurationsdatei 24 enthalten sind, konfiguriert und gestartet. Vor dem Startvorgang einer Containerinstanz 31 überprüft der Gastrechner 30, ob alle vom Containerabbild 25 für die Containerinstanz 31 festgelegten Unterverzeichnisse im Quellverzeichnis entsprechend der Verzeichnisrichtlinie 28 einbindbar sind, und/oder ob alle von der Konfigurationsdatei 24 festgelegten Netzwerkschnittstellen entsprechend der Schnittstellenrichtlinie 27 einbindbar sind ohne Einbindeoptionen von Unterverzeichnissen und Netzwerkschnittstellen von bereits vorhandenen weiteren Containerinstanzen 32 zu verletzen. Ergibt die Prüfung, dass alle Einbindeoptionen der Verzeichnis- und Schnittstellenrichtlinie erfüllt sind und somit ein positives Prüfungsergebnis vorliegt, wird die Containerinstanz 31 aus dem Containerabbild 25 erzeugt.

Somit kann mit einer für das Containerabbild hinterlegten Verzeichnis- und/oder Schnittstellenrichtline sichergestellt werden, dass persistierte Daten exklusiv für ein Containerabbild les- und schreibbar sind. Der Einrichtevorgang kann für nicht-berechtigte Containerabbilder unterbunden werden. In der erweiterten Variante können Containerabbilder aufgrund ihrer Eigenschaften (z.B. aufgrund ihrer Signatur) speziell geschützte Unterverzeichnisse anfordern. Die Einschränkungen für das Lesen und Schreiben werden nicht mehr nur von einem Plattformbetreiber definiert werden, sondern können auch vom Containerabbild-Hersteller spezifiziert werden. Durch die Interpretation von Variablen kann die Validierungskomponente im Gastrechner auch dynamisch konfigurierbare Unterverzeichnisse im Zugriff für Containerinstanzen beschränken. Gerätedateien, die exklusiv einer Containerinstanz zugeordnet werden sollen, können speziell abgesichert werden. Netzwerkschnittstellen können durch das Verfahren ebenfalls geschützt werden, wodurch verhindert wird, dass nicht-autorisierte Containerinstanzen sich auf Netzwerke andere Instanzen einhängen.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Absicherung eines Einrichtevorgangs eines Unterverzeichnisses und/oder einer Netzwerkschnittstelle für eine Containerinstanz (31) zur Bereitstellung einer Container-basierten Anwendung, bei dem mindestens ein Unterverzeichnis der Containerinstanz durch Zuweisung mindestens eines Unterverzeichnisses in einem Quellverzeichnis eines zugeordneten physikalischen Datenspeichers bereitgestellt wird und mindestens eine Netzwerkschnittstelle der Containerinstanz durch Zuweisung mindestens einer entsprechenden virtuellen oder physikalischen Netzwerkschnittstelle eines zugeordneten Gastrechners (30) bereitgestellt wird, umfassend
- Erzeugen (S1) einer Verzeichnisrichtline (28), die mindestens eine Einbinderegel für die Zuweisung des Unterverzeichnisses der Containerinstanz (31) zum Unterverzeichnis im Quellverzeichnis umfasst; und/oder
- Erzeugen (S2) einer Schnittstellenrichtline (27), die mindestens eine Einbinderegel für die Zuweisung der Netzwerkschnittstelle der Containerinstanz (31) zur Netzwerkschnittstelle des zugeordneten Gastrechners (30) umfasst,
- Laden (S3) eines Containerabbilds (25), einer zugeordneten Konfigurationsdatei (24), sowie der Verzeichnisrichtlinie (28) und/oder der Schnittstellenrichtlinie (27) in eine Laufzeitumgebung (33) des Gastrechners (30),
- in der Laufzeitumgebung (33) vor dem Startvorgang der Containerinstanz (31), Überprüfen (S4), ob alle vom Containerabbild (25) für die Containerinstanz (31) festgelegten Unterverzeichnisse im Quellverzeichnis entsprechend der Verzeichnisrichtlinie (28) einbindbar sind, und/oder ob alle von der Konfigurationsdatei (24) festgelegten Netzwerkschnittstellen entsprechend der Schnittstellenrichtlinie (27) einbindbar sind ohne Einbindeoptionen von Unterverzeichnissen und Netzwerkschnittstellen von bereits vorhandenen weiteren Containerinstanzen (32) zu verletzen, und
- Erzeugen (S5) der Containerinstanz (31) aus dem Containerabbild (25) im Gastrechner (30) lediglich bei einem positiven Überprüfungsergebnis,
wobei ein Unterverzeichnis nicht in die Containerinstanz eingebunden wird, wenn beim Überprüfen von Containerinstanzen, die aus anderen Containerabbildern und/oder mit anderen Konfigurationsdateien gebildet wurden, gegenüber der Verzeichnisrichtlinie festgestellt wird, dass die Verzeichnisrichtlinie keine erlaubte Einbindeoption für das einzubindende Unterverzeichnis enthält oder das einzubindende Unterverzeichnis ein übergeordnetes oder untergeordnetes Verzeichnis zu einem nicht in der Verzeichnisrichtlinie genannten Unterverzeichnis ist, und/oder
wobei eine Netzwerkschnittstelle nicht eingebunden wird, wenn beim Überprüfen von Containerinstanzen, die aus anderen Containerbildern und/oder mit anderen Konfigurationsdateien gebildet wurden, gegenüber der Schnittstellenrichtlinie festgestellt wird, dass die Schnittstellenrichtlinie keine erlaubte Einbindeoption für die einzubindende Netzwerkschnittstelle enthält.

2. Verfahren nach Anspruch 1, wobei die Verzeichnisrichtlinie (28) und die Schnittstellenrichtlinie (27) durch einen Ersteller der Konfigurationsdatei (24) erstellt und an die Konfigurationsdatei (24) gebunden werden.

3. Verfahren nach Anspruch 1, wobei die Verzeichnisrichtline (28) durch einen Ersteller des Containerabbilds (25) erstellt und an das Containerabbild (25) gebunden wird.

4. Verfahren nach dem vorangehenden Anspruch, wobei die Verzeichnisrichtlinie (28) Metainformation in Bezug auf die Unterverzeichnisse umfasst und die Metainformation in Form eines Abbild-Kennzeichens dem Containerabbild (25) zugewiesenen wird.

5. Verfahren nach einem der vorangehenden Ansprüche, wobei die Verzeichnisrichtlinie (28) und/oder die Schnittstellenrichtlinie (27) festlegen, ob das Unterverzeichnis im Quellverzeichnis und/oder die Netzwerkschnittstelle ausschließlich von einer einzigen Containerinstanz (31) oder von mehreren Containerinstanzen gebildet aus dem gleichen Containerabbild oder von mehreren Containerinstanzen gebildet aus unterschiedlichen Containerabbildern eingebunden werden darf.

6. Verfahren nach einem der vorangehenden Ansprüche, wobei die Verzeichnisrichtlinie (28) eine erlaubte Zugriffsoption auf das Unterverzeichnis oder die Netzwerkschnittstelle festlegt.

7. Verfahren nach einem der vorangehenden Ansprüche, wobei die Verzeichnisrichtlinie (28) und/oder Schnittstellenrichtlinie (27) Einbinderegeln abhängig von einer Signatur des Containerabbildes (25) festlegt.

8. Verfahren nach einem der vorangehenden Ansprüche, wobei die Verzeichnisrichtlinie (28) einen Verweis auf die Konfigurationsdatei (25) mit Direktiven, welche auf mindestens eine Umgebungsvariable verweisen, umfasst, und die Umgebungsvariable eine Angabe eines Unterverzeichnisses in der Containerinstanz (25) umfasst.

9. Verfahren nach einem der vorangehenden Ansprüche, wobei die Schnittstellenrichtline (27) einen Verweis auf die Konfigurationsdatei (24) mit erlaubten Eigenschaften der Netzwerkschnittstellen umfasst.

10. Verfahren nach einem der vorangehenden Ansprüche, wobei eine zentrale Einbindedatenbank (40) für die Laufzeitumgebung (33) der Containerinstanz (31) erzeugt wird, und die Einbindedatenbank (40) einen Namen und eine Version des Containerabbilds (25) aus dem die Containerinstanz (31) erzeugt wurde, das Zielverzeichnis in der Containerinstanz (31), das Quellverzeichnis des zugeordneten physikalischen Datenspeichers (30) und die erlaubten Einbindeoptionen und Zugriffsoptionen des Zielverzeichnisses, sowie die der Containerinstanz (31) zugeordneten Netzwerkschnittstellen und Einbindeoptionen umfasst.

11. Verfahren nach Anspruch 10, wobei die Einbindedatenbank (40) persistent gespeichert wird.

12. Verfahren nach Anspruch 10 und 11, wobei anhand der Einbindedatenbank (40) überprüft wird, ob ein für ein Unterverzeichnis angefordertes Quellverzeichnis oder für ein übergeordnetes oder untergeordnetes Verzeichnis des Quellverzeichnis und/oder ob eine einzubindende Netzwerkschnittstelle bereits für ein anderes Containerabbild (25) aktuell eingebunden ist oder für ein Containerabbild (25) eines anderen Typs jemals eingebunden war.

13. Verfahren nach Anspruch 10 und 12, wobei nach einem erfolgreichen Einbinden eines Unterverzeichnisses und/oder einer Netzwerkschnittstelle, der Name und die Version des Containerabbilds (25), das Zielverzeichnis in der Containerinstanz (31), das Quellverzeichnis des zugeordneten physikalischen Datenspeichers und die erlaubten Einbindeoptionen und Zugriffsoptionen des Zielverzeichnisses und/oder die eingebundene Netzwerkschnittstelle und die Einbindeoptionen für die Netzwerkschnittstelle an die Einbindedatenbank (40) übermittelt und dort gespeichert werden.

14. Anordnung (50) zur Absicherung eines Einrichtevorgangs mindestens eines Unterverzeichnisses und/oder mindestens einer Netzwerkschnittstelle für eine Containerinstanz (31) zur Bereitstellung einer Container-basierten Anwendung, bei dem ein Unterverzeichnis der Containerinstanz (31) durch Zuweisung mindestens eines Unterverzeichnisses in einem Quellverzeichnis eines zugeordneten physikalischen Datenspeichers bereitgestellt wird und mindestens eine Netzwerkschnittstelle der Containerinstanz (31) durch Zuweisung mindestens einer virtuellen oder physikalischen Netzwerkschnittstelle eines zugeordneten Gastrechners (30) bereitgestellt wird, umfassend eine Generierungsvorrichtung (20), die derart ausgebildet ist
- eine Verzeichnisrichtline (28) zu erzeugen, die mindestens eine Einbinderegel für die Zuweisung des Unterverzeichnisses der Containerinstanz (31) zum Unterverzeichnis im Quellverzeichnis umfasst, insbesondere für persistente Unterverzeichnisse in dem Daten persistent gespeicherten werden;
- eine Schnittstellenrichtline (27) zu erzeugen, die mindestens eine Einbinderegel für die Zuweisung der Netzwerkschnittstelle der Containerinstanz (31) zur virtuellen und/oder physikalischen Netzwerkschnittstelle des zugeordneten Gastrechners (30) umfasst,
- ein Containerabbild (25), eine zugeordnete Konfigurationsdatei (24), sowie die Verzeichnisrichtlinie (28) und die Schnittstellenrichtlinie (27) in eine Laufzeitumgebung (33) des Gastrechners (30) zu laden,
und der Gastrechner (30) derart ausgebildet ist,
- in der Laufzeitumgebung (33) vor dem Startvorgang der Containerinstanz (31) zu überprüfen, ob alle vom Containerabbild (25) für die Containerinstanz (31) festgelegten Unterverzeichnisse im Quellverzeichnis entsprechend der Verzeichnisrichtlinie (28) einbindbar sind, und/oder ob alle von der Konfigurationsdatei (24) festgelegten Netzwerkschnittstellen entsprechend der Schnittstellenrichtlinie (27) einbindbar sind, ohne Einbindeoptionen von Unterverzeichnissen und Netzwerkschnittstellen von bereits vorhandenen weiteren Containerinstanzen zu verletzen, und
- die Containerinstanz (31) aus dem Containerabbild (25) im Gastrechner (30) lediglich bei einem positiven Überprüfungsergebnis zu erzeugen,
wobei ein Unterverzeichnis nicht in die Containerinstanz eingebunden wird, wenn beim Überprüfen von Containerinstanzen, die aus anderen Containerabbildern und/oder mit anderen Konfigurationsdateien gebildet wurden, gegenüber der Verzeichnisrichtlinie festgestellt wird, dass die Verzeichnisrichtlinie keine erlaubte Einbindeoption für das einzubindende Unterverzeichnis enthält oder das einzubindende Unterverzeichnis ein übergeordnetes oder untergeordnetes Verzeichnis zu einem nicht in der Verzeichnisrichtlinie genannten Unterverzeichnis ist, und/oder
wobei eine Netzwerkschnittstelle nicht eingebunden wird, wenn beim Überprüfen von Containerinstanzen, die aus anderen Containerbildern und/oder mit anderen Konfigurationsdateien gebildet wurden, gegenüber der Schnittstellenrichtlinie festgestellt wird, dass die Schnittstellenrichtlinie keine erlaubte Einbindeoption für die einzubindende Netzwerkschnittstelle enthält.

15. Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens nach einem der Ansprüche 1 bis 14 durchzuführen.

## Claims

1. Method for protecting a process of setting up a subdirectory and/or a network interface for a container instance (31) for providing a container-based application, wherein at least one subdirectory of the container instance is provided by allocating at least one subdirectory in a source directory of an assigned physical data memory and at least one network interface of the container instance is provided by allocating at least one corresponding virtual or physical network interface of an assigned host computer (30), comprising
- generating (S1) a directory policy (28) comprising at least one incorporation rule for allocating the subdirectory of the container instance (31) to the subdirectory in the source directory; and/or
- generating (S2) an interface policy (27) comprising at least one incorporation rule for allocating the network interface of the container instance (31) to the network interface of the assigned host computer (30),
- loading (S3) a container image (25), an assigned configuration file (24), and the directory policy (28) and/or the interface policy (27) into a runtime environment (33) of the host computer (30),
- in the runtime environment (33) before the process of starting the container instance (31), checking (S4) whether all subdirectories in the source directory that are stipulated by the container image (25) for the container instance (31) are able to be incorporated according to the directory policy (28), and/or whether all network interfaces that are stipulated by the configuration file (24) are able to be incorporated according to the interface policy (27) without contravening incorporation options for subdirectories and network interfaces of further container instances (32) that already exist, and
- generating (S5) the container instance (31) from the container image (25) in the host computer (30) only in the event of a positive checking result,
wherein a subdirectory is not incorporated into the container instance if upon the checking of container instances which have been formed from other container images and/or with other configuration files, vis-à-vis the directory policy, it is established that the directory policy contains no permitted incorporation option for the subdirectory to be incorporated or the subdirectory to be incorporated is a superordinate or subordinate directory with respect to a subdirectory not mentioned in the directory policy, and/or
wherein a network interface is not incorporated if upon the checking of container instances which have been formed from other container images and/or with other configuration files, vis-à-vis the interface policy, it is established that the interface policy contains no permitted incorporation option for the network interface to be incorporated.

2. Method according to Claim 1, wherein the directory policy (28) and the interface policy (27) are created by a creator of the configuration file (24) and are linked to the configuration file (24).

3. Method according to Claim 1, wherein the directory policy (28) is created by a creator of the container image (25) and is linked to the container image (25).

4. Method according to the preceding claim, wherein the directory policy (28) comprises metainformation in regard to the subdirectories and the metainformation in the form of an image tag is allocated to the container image (25).

5. Method according to any of the preceding claims, wherein the directory policy (28) and/or the interface policy (27) stipulate(s) whether the subdirectory in the source directory and/or the network interface may be incorporated exclusively by a single container instance (31) or by a plurality of container instances formed from the same container image or by a plurality of container instances formed from different container images.

6. Method according to any of the preceding claims, wherein the directory policy (28) stipulates a permitted access option to the subdirectory or the network interface.

7. Method according to any of the preceding claims, wherein the directory policy (28) and/or the interface policy (27) stipulate(s) incorporation rules depending on a signature of the container image (25).

8. Method according to any of the preceding claims, wherein the directory policy (28) comprises a reference to the configuration file (25) with directives which refer to at least one environment variable, and the environment variable comprises an indication of a subdirectory in the container instance (25).

9. Method according to any of the preceding claims, wherein the interface policy (27) comprises a reference to the configuration file (24) with permitted properties of the network interfaces.

10. Method according to any of the preceding claims, wherein a central incorporation database (40) is generated for the runtime environment (33) of the container instance (31), and the incorporation database (40) comprises a name and a version of the container image (25) from which the container instance (31) was generated, the target directory in the container instance (31), the source directory of the assigned physical data memory (30) and the permitted incorporation options and access options of the target directory, and the network interfaces and incorporation options assigned to the container instance (31).

11. Method according to Claim 10, wherein the incorporation database (40) is persistently stored.

12. Method according to Claims 10 and 11, wherein on the basis of the incorporation database (40), a check is made to ascertain whether a source directory requested for a subdirectory or a superordinate or subordinate directory of the source directory and/or whether a network interface to be incorporated is already currently incorporated for a different container image (25) or has ever been incorporated for a container image (25) of a different type.

13. Method according to Claims 10 and 12, wherein after successful incorporation of a subdirectory and/or a network interface, the name and the version of the container image (25), the target directory in the container instance (31), the source directory of the assigned physical data memory and the permitted incorporation options and access options of the target directory and/or the incorporated network interface and the incorporation options for the network interface are communicated to the incorporation database (40) and stored there.

14. Arrangement (50) for protecting a process of setting up at least one subdirectory and/or at least one network interface for a container instance (31) for providing a container-based application, wherein a subdirectory of the container instance (31) is provided by allocating at least one subdirectory in a source directory of an assigned physical data memory and at least one network interface of the container instance (31) is provided by allocating at least one virtual or physical network interface of an assigned host computer (30), comprising a generating device (20) designed
- to generate a directory policy (28) comprising at least one incorporation rule for allocating the subdirectory of the container instance (31) to the subdirectory in the source directory, in particular for persistent subdirectories in which data are persistently stored;
- to generate an interface policy (27) comprising at least one incorporation rule for allocating the network interface of the container instance (31) to the virtual and/or physical network interface of the assigned host computer (30),
- to load a container image (25), an assigned configuration file (24), and the directory policy (28) and the interface policy (27) into a runtime environment (33) of the host computer (30), and the host computer (30) is designed,
- in the runtime environment (33) before the process of starting the container instance (31), to check whether all subdirectories in the source directory that are stipulated by the container image (25) for the container instance (31) are able to be incorporated according to the directory policy (28), and/or whether all network interfaces that are stipulated by the configuration file (24) are able to be incorporated according to the interface policy (27) without contravening incorporation options for subdirectories and network interfaces of further container instances that already exist, and
- to generate the container instance (31) from the container image (25) in the host computer (30) only in the event of a positive checking result,
wherein a subdirectory is not incorporated into the container instance if upon the checking of container instances which have been formed from other container images and/or with other configuration files, vis-à-vis the directory policy, it is established that the directory policy contains no permitted incorporation option for the subdirectory to be incorporated or the subdirectory to be incorporated is a superordinate or subordinate directory with respect to a subdirectory not mentioned in the directory policy, and/or
wherein a network interface is not incorporated if upon the checking of container instances which have been formed from other container images and/or with other configuration files, vis-à-vis the interface policy, it is established that the interface policy contains no permitted incorporation option for the network interface to be incorporated.

15. Computer program product, comprising a non-volatile computer-readable medium, which is loadable directly into a memory of a digital computer, comprising program code parts which, when the program code parts are executed by the digital computer, cause the latter to carry out the steps of the method according to any of Claims 1 to 14.

## Revendications

1. Procédé de sécurisation d'un processus de mise en place d'un sous-répertoire et/ou d'une interface réseau pour une instance de conteneur (31) pour la mise à disposition d'une application basée sur un conteneur, dans lequel au moins un sous-répertoire de l'instance de conteneur est mis à disposition par attribution d'au moins un sous-répertoire dans un répertoire source d'une mémoire de données physique affectée et au moins une interface réseau de l'instance de conteneur est mise à disposition par attribution d'au moins une interface réseau virtuelle ou physique correspondante d'un ordinateur hôte affecté (30), comprenant
- la production (S1) d'une directive de répertoire (28) qui comprend au moins une règle d'intégration pour l'attribution du sous-répertoire de l'instance de conteneur (31) au sous-répertoire dans le répertoire source ; et/ou
- la production (S2) d'une directive d'interface (27) qui comprend au moins une règle d'intégration pour l'attribution de l'interface réseau de l'instance de conteneur (31) à l'interface réseau de l'ordinateur hôte affecté (30),
- le chargement (S3) d'une représentation de conteneur (25), d'un fichier de configuration affecté (24) ainsi que de la directive de répertoire (28) et/ou de la directive d'interface (27) dans un environnement de temps de fonctionnement (33) de l'ordinateur hôte (30),
- dans l'environnement de temps de fonctionnement (33) avant le processus de démarrage de l'instance de conteneur (31), vérification (S4) afin de savoir si tous les sous-répertoires fixés par la représentation de conteneur (25) pour l'instance de conteneur (31) peuvent être intégrés dans le répertoire source conformément à la directive de répertoire (28), et/ou si toutes les interfaces réseau fixées par le fichier de configuration (24) peuvent être intégrées conformément à la directive d'interface (27) sans enfreindre des options d'intégration des sous-répertoires et des interfaces réseau d'autres instances de conteneur (32) déjà présentes, et
- production (S5) de l'instance de conteneur (31) à partir de la représentation de conteneur (25) dans l'ordinateur hôte (30) uniquement lors d'un résultat de vérification positif,
dans lequel un sous-répertoire n'est pas intégré dans l'instance de conteneur lorsque, lors de la vérification des instances de conteneur, qui ont été formées à partir d'autres représentations de conteneur et/ou avec d'autres fichiers de configuration, par rapport à la directive de répertoire il est constaté que la directive de répertoire ne contient pas d'option d'intégration autorisée pour le sous-répertoire à intégrer ou que le sous-répertoire à intégrer est un répertoire supérieur ou inférieur à un sous-répertoire non mentionné dans la directive de répertoire, et/ou
dans lequel une interface réseau n'est pas intégrée lorsque, lors de la vérification des instances de conteneur, qui ont été formées à partir d'autres représentations de conteneur et/ou avec d'autres fichiers de configuration, par rapport à la directive d'interface il est constaté que la directive d'interface ne contient pas d'option d'intégration autorisée pour l'interface réseau à intégrer.

2. Procédé selon la revendication 1, dans lequel la directive de répertoire (28) et la directive d'interface (27) sont établies par un créateur du fichier de configuration (24) et sont liées au fichier de configuration (24).

3. Procédé selon la revendication 1, dans lequel la directive de répertoire (28) est établie par un créateur de la représentation de conteneur (25) et est liée à la représentation de conteneur (25).

4. Procédé selon la revendication précédente, dans lequel la directive de répertoire (28) comprend une méta-information concernant les sous-répertoires et la méta-information est attribuée sous forme d'une caractéristique de représentation à la représentation de conteneur (25).

5. Procédé selon l'une des revendications précédentes, dans lequel la directive de répertoire (28) et/ou la directive d'interface (27) déterminent si le sous-répertoire dans le répertoire source et/ou l'interface réseau peut être intégré(e) exclusivement par une unique instance de conteneur (31) ou par plusieurs instances de conteneur formée(s) à partir de la même représentation de conteneur ou par plusieurs instances de conteneur formée(s) à partir de différentes représentations de conteneur.

6. Procédé selon l'une des revendications précédentes, dans lequel la directive de répertoire (28) détermine une option d'accès autorisée au sous-répertoire ou l'interface réseau.

7. Procédé selon l'une des revendications précédentes, dans lequel la directive de répertoire (28) et/ou la directive d'interface (27) détermine des règles d'intégration dépendant d'une signature de la représentation de conteneur (25).

8. Procédé selon l'une des revendications précédentes, dans lequel la directive de répertoire (28) comprend une référence au fichier de configuration (25) avec des directives, lesquelles font référence à au moins une variable d'environnement, et la variable d'environnement comprend une indication d'un sous-répertoire dans l'instance de conteneur (25).

9. Procédé selon l'une des revendications précédentes, dans lequel la directive d'interface (27) comprend une référence au fichier de configuration (24) avec des propriétés autorisées des interfaces réseau.

10. Procédé selon l'une des revendications précédentes, dans lequel une base de données d'intégration centrale (40) est produite pour l'environnement de temps de fonctionnement (33) de l'instance de conteneur (31), et la base de données d'intégration (40) comprend un nom et une version de la représentation de conteneur (25) à partir de laquelle a été produite l'instance de conteneur (31), le répertoire cible dans l'instance de conteneur (31), le répertoire source de la mémoire de données physique affectée (30) et les options d'intégration et les options d'accès autorisées du répertoire cible ainsi que les interfaces réseau et les options d'intégration affectées à l'instance de conteneur (31).

11. Procédé selon la revendication 10, dans lequel la base de données d'intégration (40) est enregistrée d'une manière persistante.

12. Procédé selon les revendications 10 et 11, dans lequel il est vérifié à l'aide de la base de données d'intégration (40) si un répertoire source demandé pour un sous-répertoire ou pour un répertoire supérieur ou inférieur du répertoire source et/ou si une interface réseau à intégrer est déjà intégrée actuellement pour une autre représentation de conteneur (25) ou a déjà été intégrée pour une représentation de conteneur (25) d'un autre type.

13. Procédé selon les revendications 10 et 12, dans lequel après une intégration réussie d'un sous-répertoire et/ou d'une interface réseau, le nom et la version de la représentation de conteneur (25), le répertoire cible dans l'instance de conteneur (31), le répertoire source de la mémoire de données physique affectée et les options d'intégration et options d'accès autorisées du répertoire cible et/ou l'interface réseau intégrée et les options d'intégration pour l'interface réseau ont été transmis à la base de données d'intégration (40) et y sont enregistrés.

14. Dispositif (50) de sécurisation d'un processus de mise en place d'au moins un sous-répertoire et/ou d'au moins une interface réseau pour une instance de conteneur (31) pour la mise à disposition d'une application basée sur un conteneur, dans lequel un sous-répertoire de l'instance de conteneur (31) est mis à disposition par attribution d'au moins un sous-répertoire dans un répertoire source d'une mémoire de données physique affectée et au moins une interface réseau de l'instance de conteneur (31) est mise à disposition par attribution d'au moins une interface réseau virtuelle ou physique d'un ordinateur hôte affecté (30), comprenant un dispositif de création (20) qui est conçu de manière
- à produire une directive de répertoire (28) qui comprend au moins une règle d'intégration pour l'attribution du sous-répertoire de l'instance de conteneur (31) au sous-répertoire dans le répertoire source, plus particulièrement pour des sous-répertoires persistants dans lesquels des données sont enregistrées d'une manière persistante ;
- à produire une directive d'interface (27) qui comprend au moins une règle d'intégration pour l'attribution de l'interface réseau de l'instance de conteneur (31) à l'interface réseau virtuelle et/ou physique de l'ordinateur hôte affecté (30),
- à charger une représentation de conteneur (25), un fichier de configuration affecté (24) ainsi que la directive de répertoire (28) et la directive d'interface (27) dans un environnement de temps de fonctionnement (33) de l'ordinateur hôte (30),
et l'ordinateur hôte(30) est conçu de manière
- à vérifier dans l'environnement de temps de fonctionnement (33) avant le processus de démarrage de l'instance de conteneur (31), si tous les sous-répertoires fixés par la représentation de conteneur (25) pour l'instance de conteneur (31) peuvent être intégrés dans le répertoire source conformément à la directive de répertoire (28), et/ou si toutes les interfaces réseau fixées par le fichier de configuration (24) peuvent être intégrées conformément à la directive d'interface (27) sans enfreindre des options d'intégration des sous-répertoires et des interfaces réseau d'autres instances de conteneur déjà présentes, et
- à produire l'instance de conteneur (31) à partir de la représentation de conteneur (25) dans l'ordinateur hôte (30) uniquement lors d'un résultat de vérification positif,
dans lequel un sous-répertoire n'est pas intégré dans l'instance de conteneur lorsque, lors de la vérification des instances de conteneur, qui ont été formées à partir d'autres représentations de conteneur et/ou avec d'autres fichiers de configuration, par rapport à la directive de répertoire il est constaté que la directive de répertoire ne contient pas d'option d'intégration autorisée pour le sous-répertoire à intégrer ou que le sous-répertoire à intégrer est un répertoire supérieur ou inférieur à un sous-répertoire non mentionné dans la directive de répertoire, et/ou
dans lequel une interface réseau n'est pas intégrée lorsque, lors de la vérification des instances de conteneur, qui ont été formées à partir d'autres représentations de conteneur et/ou avec d'autres fichiers de configuration, par rapport à la directive d'interface il est constaté que la directive d'interface ne contient pas d'option d'intégration autorisée pour l'interface réseau à intégrer.

15. Produit programme informatique comprenant un support lisible par ordinateur non volatile qui peut être chargé directement dans une mémoire d'un ordinateur numérique, comprenant des parties de code de programme qui, lors de l'exécution des parties de code de programme par l'ordinateur numérique, incitent celui-ci à réaliser les étapes du procédé selon l'une des revendications 1 à 14.
